# EUROPEAN PATENT APPLICATION

(11) **EP 4 837 819 A1**
(43) Date of publication of application: **11.11.2026**
(21) Application number: 26171966.0
(22) Date of filing: 13.04.2026
(51) Int. Cl.: B62D 15/02, B60R 25/24, H04W 12/06

(54) **MOVEMENT ASSISTANCE APPARATUS**

(30) Priority: 09.05.2025 JP 2025078587
(71) Applicant: Toyota Jidosha Kabushiki Kaisha, Toyota-shi, Aichi-ken 471-8571 (JP)
(72) Inventor: SUGANO, Tatsuya, Toyota-shi, 471-8571 (JP); YAMAMOTO, Takahiro, Toyota-shi, 471-8571 (JP); WANG, Chenyang, Toyota-shi, 471-8571 (JP)
(74) Representative: Kuhnen & Wacker Patent- und Rechtsanwaltsbüro PartG mbB

(57) **Abstract**

A movement assistance apparatus is implemented in a vehicle and executes movement assistance control for moving the vehicle in response to an operation performed by a user on a movement instruction device. The movement assistance apparatus establishes first communication with the movement instruction device, establishes second communication, which uses a communication protocol different from that of the first communication, with an electronic key, performs comparison based on first comparison information received from the movement instruction device via the first communication and second comparison information received from the electronic key via the second communication, and permits execution of the movement assistance control when the comparison succeeds.

## Description

### TECHNICAL FIELD

The present invention relates to a movement assistance apparatus that executes movement assistance control for moving a vehicle in response to an operation performed by a user on a movement instruction device.

### BACKGROUND

Conventionally, a movement assistance apparatus that executes movement assistance control for moving a vehicle in response to an operation performed by a user on a movement instruction device has been known. For example, a movement assistance apparatus described in Patent Document 1 (hereinafter referred to as the "conventional apparatus") has a registration table in which a smartphone ID of a smartphone and an electronic key ID of an electronic key are associated with each other in advance. The conventional apparatus compares the smartphone ID of the smartphone with the electronic key ID of an electronic key located outside the vehicle. According to the conventional apparatus, when the comparison succeeds, the smartphone enters a state in which it is capable of accepting a movement assistance operation for moving the vehicle (i.e., the conventional apparatus permits execution of the movement assistance control). On the other hand, when the comparison fails, the smartphone enters a state in which it does not accept the movement assistance operation (i.e., the conventional apparatus prohibits execution of the movement assistance control).

Patent Document 1: Japanese Patent Application Laid-Open No. 2023-101336

### SUMMARY

In recent years, a user has become able to use a plurality of vehicles with the same electronic key. In this case, the same smartphone ID of the user and the electronic key ID of the user are associated with each other in advance in each of the registration tables of the movement assistance apparatuses of the plurality of vehicles. The plurality of vehicles are parked near each other, and a user carrying a smartphone and an electronic key whose IDs are registered in the registration tables is located in the vicinity of these vehicles. In such a situation, there is a possibility that the smartphone is connected to a vehicle other than the vehicle that the user intends to move (hereinafter referred to as the "target vehicle"). In the conventional apparatus of the vehicle to which the smartphone is connected, the comparison succeeds. When the user performs a movement instruction operation on the smartphone, there is a possibility that a vehicle other than the target vehicle moves.

The present invention has been made in order to address the above-described problem. That is, one of the objects of the present invention is to provide a movement assistance apparatus capable of reducing a possibility that a vehicle other than the target vehicle that a user intends to move is moved.

A movement assistance apparatus according to the present invention is implemented in a vehicle (VA) and executes movement assistance control for moving the vehicle in response to an operation performed by a user on a movement instruction device (SP). The movement assistance apparatus is configured to:
establish first communication with the movement instruction device;
establish second communication, which uses a communication protocol different from that of the first communication, with the electronic key;
perform comparison based on first comparison information received from the movement instruction device via the first communication and second comparison information received from the electronic key via the second communication (steps 330, 510, 525, 535, and 540);
permit execution of the movement assistance control when the comparison succeeds (step 335: "Yes") (step 360); and
prohibit execution of the movement assistance control when the comparison fails (step 335: "No") (step 340).

The movement assistance apparatus performs comparison based on the first comparison information received via the first communication and the second comparison information received via the second communication, which uses a communication protocol different from that of the first communication. The movement assistance apparatus permits execution of the movement assistance control when the comparison succeeds, and prohibits execution of the movement assistance control when the comparison fails. As a result, even when the first communication is connected to a vehicle other than the target vehicle, the comparison fails in the vehicle other than the target vehicle, and thus execution of the movement assistance control is prohibited. Therefore, it is possible to reduce the possibility that a vehicle other than the target vehicle is moved by the movement assistance control.

### BRIEF DESCRIPTION OF THE DRAWINGS

FIG. 1 is a schematic system configuration diagram of a movement assistance apparatus and a smartphone according to an embodiment of the present invention.
FIG. 2 is a diagram for explaining an example of operation of the movement assistance apparatus according to the embodiment of the present invention.
FIG. 3 is a flowchart of a movement assistance control permission routine executed by a CPU of an ECU shown in FIG. 1.
FIG. 4 is a flowchart of an electronic key identification subroutine executed by the CPU of the ECU shown in FIG. 1.
FIG. 5 is a flowchart of an ID comparison subroutine executed by the CPU of the ECU shown in FIG. 1.

### DETAILED DESCRIPTION

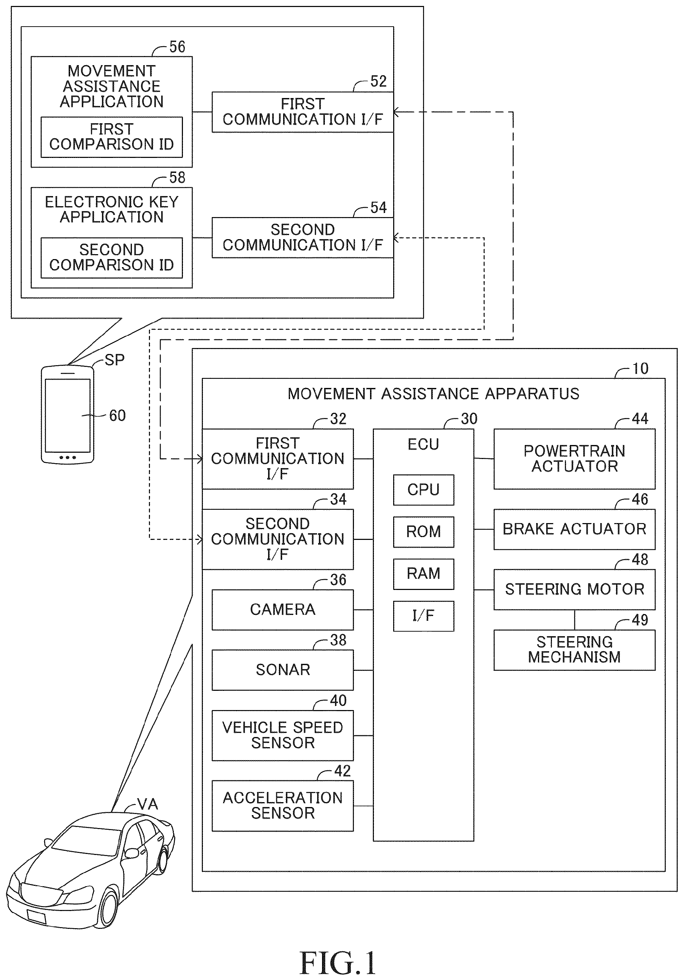

As shown in FIG. 1, a movement assistance apparatus 10 according to the embodiment of the present invention (hereinafter referred to as "the present apparatus 10") is applied to a vehicle VA. The present apparatus 10 transmits and receives data to and from a smartphone SP operated by a user via first communication and second communication. For example, the first communication is Bluetooth and the second communication is Bluetooth Low Energy (hereinafter referred to as "BLE").

The present apparatus 10 includes the components shown in FIG. 1. In the present specification, an "ECU 30" is an electronic control unit having a microcomputer as a main component. The ECU 30 is also referred to as a control unit, a controller, or a computer. The microcomputer includes a CPU (processor), a ROM, a RAM, an interface (I/F), and the like. The functions realized by the ECU 30 may be realized by a plurality of ECUs.

A first communication interface (I/F) 22 is an interface for transmitting and receiving data to and from the smartphone SP via the first communication. A second communication interface (I/F) 24 is an interface for transmitting and receiving data to and from the smartphone SP via the second communication.

A camera 36 acquires image data by capturing images of the surroundings of the vehicle VA. The ECU 30 acquires the image data from the camera 36. A sonar 38 acquires sonar data representing a position of an object relative to the vehicle VA by scanning the environment surrounding the vehicle VA. The ECU 30 acquires the sonar data from the sonar 38.

A vehicle speed sensor 40 measures a vehicle speed Vs representing a speed of the vehicle VA. A steering angle sensor 42 measures a steering angle θ of steered wheels of the vehicle VA. The ECU 30 acquires measurement values from these sensors 40 and 42.

A powertrain actuator 44 changes a driving force generated by a driving device (for example, an internal combustion engine and/or an electric motor) of the vehicle VA. A brake actuator 46 controls a braking force applied to the vehicle VA. A steering motor 48 is incorporated in a steering mechanism 49. The steering mechanism 49 is a mechanism for steering the steered wheels in accordance with an operation of a steering wheel. Furthermore, the steering motor 48 causes the steering mechanism 49 to generate an automatic steering torque for changing a steering angle θ of the steered wheels in response to an instruction from the ECU 30.

The smartphone SP includes the components shown in FIG. 1. A first communication interface (I/F) 52 is an interface for transmitting and receiving data to and from the present apparatus 10 via the first communication. A second communication interface (I/F) 54 is an interface for transmitting and receiving data to and from the present apparatus 10 via the second communication.

A movement assistance application 56 and an electronic key application 58 are installed on the smartphone SP, and a CPU (not shown) of the smartphone SP executes these applications 56 and 58.

A first comparison ID is set in the movement assistance application 56, and a second comparison ID is set in the electronic key application 58. The movement assistance application 56 transmits the first comparison ID to the movement assistance apparatus 10 via the first communication I/F 52 (i.e., via the first communication). The electronic key application 58 transmits the second comparison ID to the movement assistance apparatus 10 via the second communication I/F 54 (i.e., via the second communication). In the present embodiment, the same ID is used as the first comparison ID and the second comparison ID. For example, a vehicle ID for identifying the vehicle VA is used as the first comparison ID and the second comparison ID. Note that the first comparison ID and the second comparison ID may also be referred to as first comparison information and second comparison information, respectively.

A display device 60 is a touch panel display. The display device 60 displays various screens. A user can perform various inputs by touching a screen displayed on the display device 60.

### <Establishment of First Communication>

Once the smartphone SP and the vehicle VA are paired, the first communication is established when the smartphone SP approaches the vehicle VA.

### <Establishment of Second Communication>

For example, the smartphone SP transmits an advertising packet including a smartphone ID representing an identifier of the smartphone at a predetermined cycle. When the vehicle VA detects the smartphone SP by receiving the advertising packet, the vehicle VA transmits a connection request to the smartphone SP. When the smartphone SP receives the connection request, the second communication is established. Once the second communication is established, the smartphone SP transmits the second comparison ID at a predetermined cycle until a success notification or a failure notification described later is received.

### <Movement Assistance Control>

When the movement assistance application 56 is started on the smartphone SP, the smartphone SP displays on the display device 60 a selection screen for selecting a "vehicle to be moved (hereinafter referred to as the 'target vehicle')." When the user selects the target vehicle on the selection screen, the smartphone SP transmits a comparison request to the target vehicle via the first communication. The smartphone SP transmits the first comparison ID at a predetermined cycle from the transmission of the comparison request until a success notification or a failure notification described later is received.

The ECU 30 performs comparison based on the first comparison ID and the second comparison ID. When the comparison succeeds, the ECU 30 permits execution of the movement assistance control and executes the movement assistance control. In the movement assistance control, the ECU 30 automatically moves the vehicle VA to a destination in response to a predetermined movement instruction operation. The movement instruction operation is performed by a user outside the vehicle on the smartphone SP. For example, the movement assistance control includes parking assistance control for automatically parking the vehicle VA in a parking space while the user is outside the vehicle, and exit assistance control for automatically moving the parked vehicle VA to an exit space while the user is outside the vehicle. Note that a device on which the user performs the movement instruction operation (in this example, the smartphone SP) may be referred to as a "movement instruction device."

When the movement assistance control is executed, a control screen having an operation input area is displayed on the display device 60 of the smartphone SP. When the user moves a finger touching the operation input area, the smartphone SP (the movement assistance application 56) determines that a movement instruction operation has been performed, and transmits a movement instruction to the present apparatus 10. As long as the ECU 30 receives the movement instruction, the ECU 30 moves the vehicle VA toward the destination. Specifically, the ECU 30 sets a route to the destination when starting the movement assistance control. The ECU 30 controls the steering motor 48 so that the vehicle VA travels along the route. Furthermore, the ECU 30 controls the powertrain actuator 44 and the brake actuator 46 so that the acceleration G matches a target acceleration Gtgt such that the vehicle speed Vs becomes equal to or less than a preset set vehicle speed. Note that during execution of the movement assistance control, when the ECU 30 determines based on the image data and the sonar data that an object that may come into contact with the vehicle VA is present, the ECU 30 stops the vehicle VA or travels so as to avoid the object.

### (Overview of Operation)

The ECU 30 permits execution of the movement assistance control when the comparison succeeds, and prohibits execution of the movement assistance control when the comparison fails. Specifically, the ECU 30 determines that the comparison has succeeded when the first comparison ID and the second comparison ID are the same.

When the connection destination of the first communication and the connection destination of the second communication are different, the present apparatus 10 does not receive either one of the first comparison ID and the second comparison ID. Therefore, the ECU 30 determines that the comparison has failed and prohibits execution of the movement assistance control. Accordingly, even if the first communication or the second communication is connected to a vehicle other than the target vehicle, the present apparatus 10 applied to that vehicle prohibits execution of the movement assistance control. As a result, the present apparatus 10 can reduce the possibility that the vehicle other than the target vehicle is moved by the movement assistance control.

### (Example of Operation)

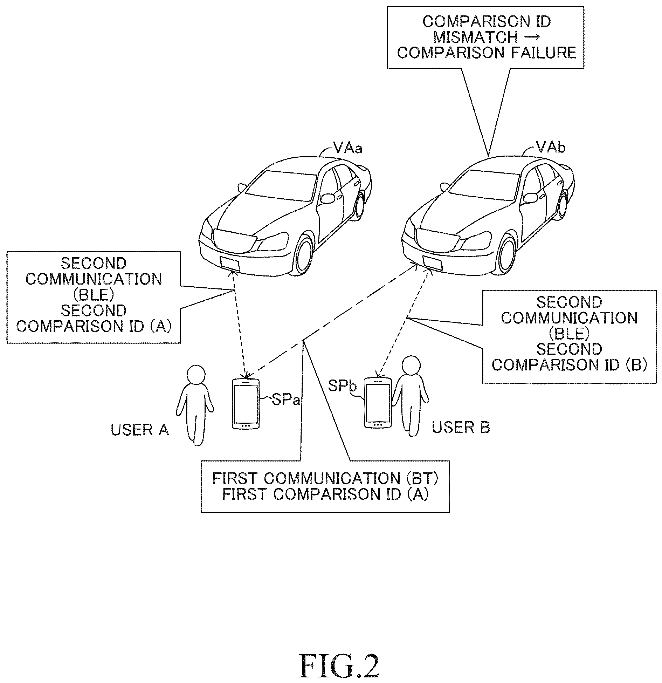

An example of operation of the present apparatus 10 will be described with reference to FIG. 2.

In FIG. 2, user A and user B are located in the vicinity of vehicle VAa and vehicle VAb. User A is granted operation authority over both vehicle VAa and vehicle VAb, and user B is granted operation authority over vehicle VAb only.

First, an example will be described in which only user A is located in the vicinity of vehicle VAa and vehicle VAb, and user B is not located in the vicinity of vehicle VAa and vehicle VAb. The second communication is established between the smartphone SPa of user A and the vehicle VAa, and the first communication is established between the smartphone SPa and the vehicle VAb. The vehicle VAb receives the first comparison ID ("A") from the smartphone SPa via the first communication. The vehicle VAa receives the second comparison ID ("A") from the smartphone SPa via the second communication.

When user A selects vehicle VAa as the target vehicle, the smartphone SPa transmits a comparison request to vehicle VAb via the first communication. Since vehicle VAb has not received the second comparison ID, the comparison fails in the movement assistance apparatus 10 of vehicle VAb. Therefore, even when the first communication is established between the smartphone SPa and vehicle VAb, which is different from the target vehicle VAa, the comparison fails in vehicle VAb. As a result, execution of the movement assistance control is prohibited in vehicle VAb, thereby reducing the possibility that vehicle VAb is moved by the movement assistance control.

Furthermore, since vehicle VAa has not received the first comparison ID, the comparison fails even if vehicle VAa receives a comparison request from a smartphone other than the smartphone SPa of user A. Therefore, execution of the movement assistance control is prohibited in vehicle VAa, thereby reducing the possibility that vehicle VAa is moved by the movement assistance control.

Next, an example will be described in which both user A and user B are located in the vicinity of vehicle VAa and vehicle VAb. In this case, as in the example described above, the second communication is established between the smartphone SPa and the vehicle VAa, and the first communication is established between the smartphone SPa and the vehicle VAb. Furthermore, the second communication is established between the smartphone SPb of user B and the vehicle VAb. The smartphone SPa transmits a comparison request to vehicle VAb via the first communication.

In this case, vehicle VAb receives the second comparison ID ("B") from the smartphone SPb via the second communication, and the first comparison ID ("A") from the smartphone SPa via the first communication. The first comparison ID ("A") received by vehicle VAb differs from the second comparison ID ("B"). Therefore, the comparison fails in the movement assistance apparatus 10 of vehicle VAb. As a result, execution of the movement assistance control is prohibited in vehicle VAb, thereby reducing the possibility that vehicle VAb, which is different from the target vehicle VAa, is moved by the movement assistance control.

As in the example described above, since vehicle VAa does not receive the second comparison ID, the comparison also fails in the movement assistance apparatus 10 of vehicle VAa, and execution of the movement assistance control is prohibited in vehicle VAa.

### (Specific Operation)

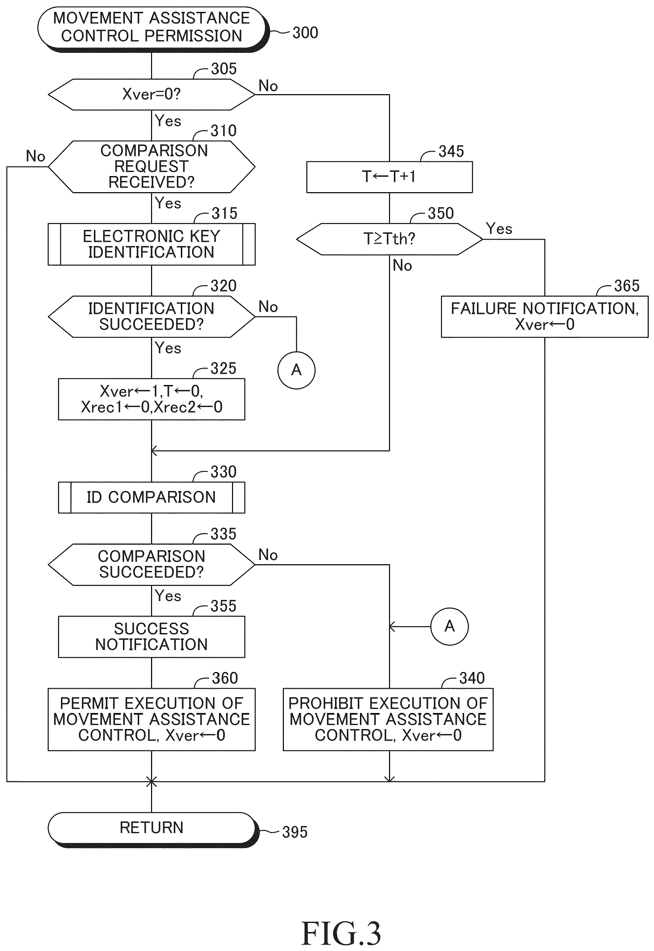

The CPU of the ECU 30 executes a routine shown in the flowchart of FIG. 3 each time a predetermined time period elapses.

### <Movement Assistance Control Permission Routine>

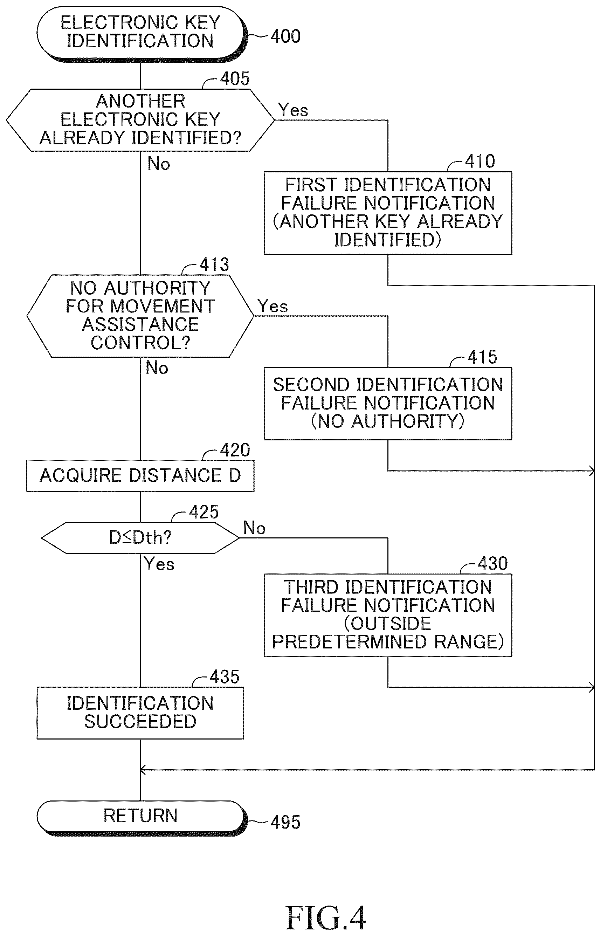

When an appropriate time comes, the CPU starts a process from step 300 of FIG. 3, and the process proceeds to step 305. At step 305, the CPU determines whether or not an identification flag Xver is "0." The identification flag Xver is set to "1" when identification of the electronic key succeeds, and is set to "0" when identification of the electronic key fails. The identification of the electronic key will be described in detail with reference to FIG. 4. Note that the identification flag Xver is set to "0" in an initialization routine. The initialization routine is executed by the CPU when an ignition key switch (not shown) of the vehicle VA is changed from an OFF position to an ON position.

When the identification flag Xver is "0," the CPU makes a "Yes" determination at step 305, and the process proceeds to step 310. At step 310, the CPU determines whether or not the present apparatus 10 has received the comparison request from the smartphone SP.

When the present apparatus 10 has not received the comparison request, the CPU makes a "No" determination at step 310, and the process proceeds to step 395. At step 395, the CPU temporarily terminates the present routine.

On the other hand, when the present apparatus 10 has received the comparison request, the CPU makes a "Yes" determination at step 310 and executes steps 315 and 320.

Step 315: The CPU executes an electronic key identification subroutine for identifying the electronic key. The details of the electronic key identification subroutine will be described with reference to FIG. 4.

Step 320: The CPU determines whether or not the identification of the electronic key has succeeded in the electronic key identification subroutine.

When the identification of the electronic key has succeeded, the CPU makes a "Yes" determination at step 320 and executes steps 325 to 335.

Step 325: The CPU sets the identification flag Xver to "1," sets a timer T to "0," and sets a first reception flag Xrec1 and a second reception flag Xrec2 to "0."

The timer T is a timer for counting the time that has elapsed since the identification of the electronic key succeeded without the comparison succeeding. The first reception flag Xrec1 is set to "1" when the first comparison ID is received. The second reception flag Xrec2 is set to "1" when the second comparison ID is received.

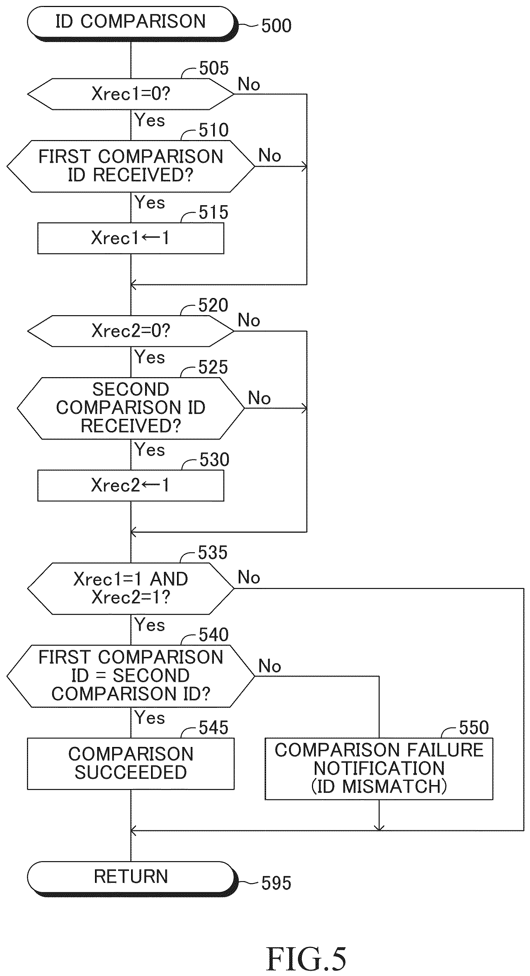

Step 330: The CPU executes an ID comparison subroutine for performing comparison based on the first comparison ID and the second comparison ID. The details of the ID comparison subroutine will be described with reference to FIG. 5.

Step 335: The CPU determines whether or not the comparison has succeeded in the ID comparison subroutine.

When the comparison fails, the CPU makes a "No" determination at step 335, and the process proceeds to step 340. At step 340, the CPU prohibits execution of the movement assistance control and sets the identification flag Xver to "0." Thereafter, the process proceeds to step 395, and the CPU temporarily terminates the present routine.

In a case where the identification flag Xver is "1" when the process proceeds to step 305, the CPU makes a "No" determination at step 305, and the CPU executes steps 345 and 350.
Step 345: The CPU adds "1" to the timer T.
Step 350: The CPU determines whether or not the timer T is equal to or greater than a threshold Tth.

When the timer T is less than the threshold Tth, the CPU makes a "No" determination at step 350, and the process proceeds to step 330. Thereafter, in a case where the comparison succeeds when the process proceeds to step 335, the CPU makes a "Yes" determination at step 335 and executes steps 355 and 360.

Step 355: The CPU transmits the success notification to the smartphone SP via the first communication.

When the smartphone SP receives the success notification, the smartphone SP notifies the user that the target vehicle has become movable as a result of the comparison succeeding. As an example, the smartphone SP displays on the display device 60 a screen indicating that the target vehicle has become movable as a result of the comparison succeeding.

Step 360: The CPU permits execution of the movement assistance control and sets the identification flag Xver to "0."

Thereafter, the process proceeds to step 395.

In a case where the timer T is equal to or greater than the threshold Tth when the process proceeds to step 350, the CPU makes a "Yes" determination at step 350, and the process proceeds to step 365. At step 365, the CPU transmits the failure notification to the smartphone SP via the first communication and sets the identification flag Xver to "0." Thereafter, the process proceeds to step 395.

Specifically, when the first reception flag Xrec1 is "1" and the second reception flag Xrec2 is "0," a first failure condition is satisfied. In this case, the CPU transmits a first failure notification to the smartphone SP. When the smartphone SP receives the first failure notification, the smartphone SP notifies the user that the comparison has failed due to the first failure condition being satisfied (i.e., that the second comparison ID has not been received despite the first comparison ID having been received). As an example, the smartphone SP displays a screen to that effect on the display device 60.

When the first reception flag Xrec1 is "0" and the second reception flag Xrec2 is "1," a second failure condition is satisfied. In this case, the CPU transmits a second failure notification to the smartphone SP. When the smartphone SP receives the second failure notification, the smartphone SP notifies the user that the comparison has failed due to the second failure condition being satisfied (i.e., that the first comparison ID has not been received despite the second comparison ID having been received).

When both the first reception flag Xrec1 and the second reception flag Xrec2 are "0," a third failure condition is satisfied. In this case, the CPU transmits a third failure notification to the smartphone SP. When the smartphone SP receives the third failure notification, the smartphone SP notifies the user that the comparison has failed due to the third failure condition being satisfied (i.e., that neither the first comparison ID nor the second comparison ID has been received).

On the other hand, in a case where the identification of the electronic key has failed when the process proceeds to step 320, the CPU determines that the comparison has failed. In this case, the CPU makes a "No" determination at step 320, and the process proceeds to step 340.

### <Electronic Key Identification Subroutine>

When the process proceeds to step 315, the CPU starts a process from step 400 of FIG. 4, and the process proceeds to step 405. At step 405, the CPU determines whether or not an electronic key implemented in a smartphone different from the smartphone SP that transmitted the comparison request (hereinafter referred to as "another electronic key") has already been identified. Note that the comparison request includes a smartphone ID. Specifically, the CPU stores the smartphone ID indicating the identifier of the smartphone of the electronic key whose identification has succeeded. When a smartphone ID different from the smartphone ID of the smartphone that transmitted the comparison request is stored, the CPU determines that another electronic key has already been identified.

When another electronic key has already been identified, the movement assistance control cannot be executed from the smartphone SP that transmitted the comparison request. In this case, the CPU determines that the identification of the electronic key has failed. The CPU also determines that the comparison has failed when the identification of the electronic key has failed. When another electronic key has already been identified, the CPU determines that a first identification failure condition is satisfied and makes a "No" determination at step 405. Thereafter, the process proceeds to step 410. At step 410, the CPU transmits a first identification failure notification to the smartphone SP via the first communication. When the smartphone SP receives the first identification failure notification, the smartphone SP notifies the user that the comparison has failed due to the first identification failure condition being satisfied. Thereafter, the process proceeds to step 495, the CPU temporarily terminates the present routine, and the process proceeds to step 320 shown in FIG. 3.

On the other hand, when another electronic key has not yet been identified, the CPU makes a "Yes" determination at step 405, and the process proceeds to step 413. At step 413, the CPU determines whether or not the electronic key implemented in the smartphone SP that transmitted the comparison request has been granted authority for the movement assistance control. Specifically, the present apparatus 10 registers in advance grant information in which an electronic key ID is associated with information indicating whether or not the electronic key identified by the electronic key ID has been granted authority for the movement assistance control. When the second communication is established, the CPU refers to the grant information and determines whether or not the electronic key of the connection destination of the second communication has been granted authority for the movement assistance control.

When the electronic key has not been granted authority for the movement assistance control, the user of that electronic key cannot execute the movement assistance control. In this case, the CPU determines that a second identification failure condition is satisfied and determines that the identification of the electronic key has failed. Specifically, the CPU makes a "Yes" determination at step 413. Thereafter, the process proceeds to step 415. At step 415, the CPU transmits a second identification failure notification to the smartphone SP via the first communication. When the smartphone SP receives the second identification failure notification, the smartphone SP notifies the user that the comparison has failed due to the second identification failure condition being satisfied. Thereafter, the process proceeds to step 495.

On the other hand, when the electronic key has been granted authority for the movement assistance control, the CPU makes a "No" determination at step 413 and executes steps 420 and 425.

Step 420: The CPU acquires a distance D to the electronic key implemented in the smartphone SP that transmitted the comparison request based on the second communication.

Step 425: The CPU determines whether or not the distance D is equal to or less than a threshold distance Dth.

When the distance D is greater than the threshold distance Dth, the CPU determines that a third identification failure condition is satisfied and determines that the identification of the electronic key has failed. Specifically, the CPU makes a "No" determination at step 425. Thereafter, the process proceeds to step 430. At step 430, the CPU transmits a third identification failure notification to the smartphone SP via the first communication. When the smartphone SP receives the third identification failure notification, the smartphone SP notifies the user that the comparison has failed due to the third identification failure condition being satisfied. Thereafter, the process proceeds to step 495.

On the other hand, when the distance D is equal to or less than the threshold distance Dth, the CPU makes a "Yes" determination at step 425, and the process proceeds to step 435. At step 435, the CPU determines that the identification of the electronic key has succeeded. Thereafter, the process proceeds to step 495.

### <ID Comparison Subroutine>

When the process proceeds to step 330, the CPU starts a process from step 500 of FIG. 5, and the process proceeds to step 505. At step 505, the CPU determines whether or not the first reception flag Xrec1 is "0."

When the first reception flag Xrec1 is "0," the CPU makes a "Yes" determination at step 505, and the process proceeds to step 510. At step 510, the CPU determines whether or not the present apparatus 10 has already received the first comparison ID.

When the present apparatus 10 has already received the first comparison ID, the CPU makes a "Yes" determination at step 510, and the process proceeds to step 515. At step 515, the CPU sets the first reception flag Xrec1 to "1." Thereafter, the process proceeds to step 520.

When the first reception flag Xrec1 is "1," the CPU makes a "No" determination at step 505, and the process proceeds to step 520. When the present apparatus 10 has not yet received the first comparison ID, the CPU makes a "No" determination at step 510, and the process proceeds to step 520.

At step 520, the CPU determines whether or not the second reception flag Xrec2 is "0." When the second reception flag Xrec2 is "0," the CPU makes a "Yes" determination at step 520, and the process proceeds to step 525. At step 525, the CPU determines whether or not the present apparatus 10 has already received the second comparison ID.

When the present apparatus 10 has already received the second comparison ID, the CPU makes a "Yes" determination at step 525, and the process proceeds to step 530. At step 530, the CPU sets the second reception flag Xrec2 to "1." Thereafter, the process proceeds to step 535.

When the second reception flag Xrec2 is "1," the CPU makes a "No" determination at step 520, and the process proceeds to step 535. When the present apparatus 10 has not yet received the second comparison ID, the CPU makes a "No" determination at step 525, and the process proceeds to step 535.

At step 535, the CPU determines whether or not both the first reception flag Xrec1 and the second reception flag Xrec2 are "1." When both the first reception flag Xrec1 and the second reception flag Xrec2 are "1," the CPU makes a "Yes" determination at step 535, and the process proceeds to step 540.

At step 540, the CPU determines whether or not the first comparison ID is the same as the second comparison ID. When the first comparison ID is the same as the second comparison ID, the CPU makes a "Yes" determination at step 540, and the process proceeds to step 545. At step 545, the CPU determines that the comparison has succeeded. Thereafter, the process proceeds to step 595, the CPU temporarily terminates the present routine, and the process proceeds to step 335 shown in FIG. 3.

On the other hand, when the first comparison ID differs from the second comparison ID, a fourth failure condition is satisfied. In this case, the CPU makes a "No" determination at step 540, and the process proceeds to step 550. At step 550, the CPU transmits a fourth failure notification to the smartphone SP via the first communication. When the smartphone SP receives the fourth failure notification, the smartphone SP notifies the user that the comparison has failed due to the fourth failure condition being satisfied (i.e., that the first comparison ID differs from the second comparison ID). Thereafter, the process proceeds to step 595.

In a case where at least one of the first reception flag Xrec1 and the second reception flag Xrec2 is "0" when the process proceeds to step 535, the CPU makes a "No" determination at step 535, and the process proceeds to step 595.

As described above, the present apparatus 10 performs comparison based on the first comparison ID received via the first communication and the second comparison ID received via the second communication, which uses a communication protocol different from that of the first communication. The present apparatus 10 permits execution of the movement assistance control when the comparison succeeds, and prohibits execution of the movement assistance control when the comparison fails. As a result, even when the first communication is connected to a vehicle other than the target vehicle, the comparison fails in the vehicle other than the target vehicle, and thus execution of the movement assistance control is prohibited. Therefore, it is possible to reduce the possibility that a vehicle other than the target vehicle is moved by the movement assistance control.

Furthermore, when the comparison fails, the present apparatus 10 notifies the user of the cause of the comparison failure, thereby increasing the possibility that the user takes an appropriate action in response to the cause of the failure.

The present invention is not limited to the above-described embodiment, and various modifications may be adopted within the scope of the present invention. The first communication and the second communication are not limited to Bluetooth and BLE, respectively, and it is sufficient that the first communication and the second communication use communication protocols different from each other.

Although the electronic key application 58 is implemented on the movement instruction device (smartphone SP), it may be implemented on a device different from the movement instruction device as long as the device is carried by the user.

In the above-described embodiment, the movement assistance application 56 and the electronic key application 58 of the smartphone SP transmit the same comparison ID; however, they may transmit different comparison IDs. In this case, the movement assistance apparatus 10 needs to have a comparison ID table in which a correspondence relationship between the first comparison ID transmitted by the movement assistance application 56 and the second comparison ID transmitted by the electronic key application 58 is registered. When the movement assistance apparatus 10 determines that the received first comparison ID and the received second comparison ID have a correspondence relationship based on the comparison ID table, the movement assistance apparatus 10 determines that the comparison succeeds.

The present apparatus 10 can be applied to (or installed in/on) an engine vehicle, a hybrid electric vehicle (HEV), a plug-in hybrid electric vehicle (PHEV), a fuel cell electric vehicle (FCEV), and a battery electric vehicle (BEV). Note that the movement assistance control is a type of automatic driving for assisting the driving of the user.

## Claims

1. A movement assistance apparatus (10) implemented in a vehicle (VA) and configured to execute movement assistance control for moving the vehicle in response to an operation performed by a user on a movement instruction device (SP),
wherein the movement assistance apparatus is configured to:
establish first communication with the movement instruction device;
establish second communication, which uses a communication protocol different from that of the first communication, with an electronic key;
perform comparison based on first comparison information received from the movement instruction device via the first communication and second comparison information received from the electronic key via the second communication (steps 330, 510, 525, 535, 540);
permit execution of the movement assistance control when the comparison succeeds (step 335: "Yes") (step 360); and
prohibit execution of the movement assistance control when the comparison fails (step 335: "No") (step 340).

2. The movement assistance apparatus (10) according to claim 1,
wherein the electronic key is implemented in the movement instruction device (SP),
wherein the same information is transmitted as the first comparison information and the second comparison information, and
wherein the movement assistance apparatus is configured to determine that the comparison succeeds when the first comparison information and the second comparison information are the same (step 540).

3. The movement assistance apparatus (10) according to claim 2,
wherein the movement assistance apparatus is configured to:
provide a failure notification in a manner that enables the user to identify a cause of the comparison failure when the comparison fails (steps 365, 410, 415, 430, 550).

4. The movement assistance apparatus (10) according to claim 3,
wherein the movement assistance apparatus is configured to:
determine that the comparison fails when any one of the following conditions is satisfied:
a first failure condition that the second comparison information has not been received despite the first comparison information having been received;
a second failure condition that the first comparison information has not been received despite the second comparison information having been received;
a third failure condition that neither the first comparison information nor the second comparison information has been received; and
a fourth failure condition that the first comparison information and the second comparison information differ from each other despite both having been received (step 540: "No"); and
provide the failure notification in a manner that enables the user to identify which of the first to fourth failure conditions is satisfied to cause the comparison to fail, when the comparison fails (step 550).

5. The movement assistance apparatus (10) according to claim 4,
wherein the movement assistance apparatus is configured to:
determine that the comparison fails when any one of the following conditions is satisfied:
a first identification failure condition that the vehicle has already identified another electronic key (step 405: "Yes");
a second identification failure condition that the electronic key does not have authority to execute the movement assistance control (step 413: "Yes"); and
a third identification failure condition that the electronic key is not located within a predetermined distance from the vehicle (step 425: "No"); and
provide the failure notification in a manner that enables the user to identify which of the first to third identification failure conditions is satisfied to cause the comparison to fail (steps 410, 415, 430).
